(19)

**Europäisches Patentamt**
**European Patent Office**
**Office européen des brevets**

(11)  **EP 2 777 017 B1**

(12) **EUROPÄISCHE PATENTSCHRIFT**

(45) Veröffentlichungstag und Bekanntmachung des Hinweises auf die Patenterteilung:
**09.09.2015  Patentblatt 2015/37**

(21) Anmeldenummer: **12787370.1**

(22) Anmeldetag: **02.11.2012**

(51) Int Cl.:
*H04N 19/527* (2014.01)      *H04N 19/54* (2014.01)
*H04N 19/543* (2014.01)      *G06T 9/00* (2006.01)
*G01C 21/36* (2006.01)      *H04N 19/61* (2014.01)
*H04N 19/507* (2014.01)

(86) Internationale Anmeldenummer:
**PCT/EP2012/004580**

(87) Internationale Veröffentlichungsnummer:
**WO 2013/068086 (16.05.2013 Gazette 2013/20)**

(54) **VERFAHREN ZUM VERARBEITEN EINER BILDSEQUENZ UND TESTGERÄT FÜR EINEN KRAFTWAGEN**

METHOD FOR PROCESSING AN IMAGE SEQUENCE AND TESTER FOR A CAR

PROCÉDÉ POUR TRAITER UNE SÉQUENCE D'IMAGES ET APPAREIL D'ESSAI POUR VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.11.2011   DE 102011118088**
**18.05.2012   DE 102012009876**

(43) Veröffentlichungstag der Anmeldung:
**17.09.2014   Patentblatt 2014/38**

(73) Patentinhaber: **Audi AG**
**85045 Ingolstadt (DE)**

(72) Erfinder:
• **SIMMET, Franz**
**86830 Schwabmünchen (DE)**
• **NIEDERKORN, Dieter**
**86529 Schrobenhausen (DE)**
• **KAUP, André**
**91090 Effeltrich (DE)**
• **SPRINGER, Dominic**
**91052 Erlangen (DE)**

(74) Vertreter: **Schuster, Simon**
**c/o AUDI AG, Patentabteilung**
**85045 Ingolstadt (DE)**

(56) Entgegenhaltungen:
• **CHANGFENG NIU ET AL: "Moving Object Segmentation in the H.264 Compressed Domain", 23. September 2009 (2009-09-23), COMPUTER VISION Â ACCV 2009, SPRINGER BERLIN HEIDELBERG, BERLIN, HEIDELBERG, PAGE(S) 645 - 654, XP019141318, ISBN: 978-3-642-12303-0 Zusammenfassung Paragraph 3.1 mit Bild 1**
• **HOTTER M ET AL: "Image segmentation based on object oriented mapping parameter estimation", SIGNAL PROCESSING, ELSEVIER SCIENCE PUBLISHERS B.V. AMSTERDAM, NL, Bd. 15, Nr. 3, 1. Oktober 1988 (1988-10-01), Seiten 315-334, XP026658733, ISSN: 0165-1684, DOI: 10.1016/0165-1684(88)90021-7 [gefunden am 1988-10-01]**
• **GIROD B ET AL: "Affine Multipicture Motion-Compensated Prediction", IEEE TRANSACTIONS ON CIRCUITS AND SYSTEMS FOR VIDEO TECHNOLOGY, IEEE SERVICE CENTER, PISCATAWAY, NJ, US, Bd. 15, Nr. 2, 1. Februar 2005 (2005-02-01), Seiten 197-209, XP011126403, ISSN: 1051-8215, DOI: 10.1109/TCSVT.2004.841690**

EP 2 777 017 B1

**(Forts. nächste Seite)**

- GOLBAN C ET AL: "A practical method for ego vehicle motion estimation from video", INTELLIGENT COMPUTER COMMUNICATION AND PROCESSING, 2009. ICCP 2009. IEEE 5TH INTERNATIONAL CONFERENCE ON, IEEE, PISCATAWAY, NJ, USA, 27. August 2009 (2009-08-27), Seiten 87-94, XP031545143, ISBN: 978-1-4244-5007-7
- CHANG YUAN ET AL: "Detecting Motion Regions in the Presence of a Strong Parallax from a Moving Camera by Multiview Geometric Constraints", TRANSACTIONS ON PATTERN ANALYSIS AND MACHINE INTELLIGENCE, IEEE, PISCATAWAY, USA, Bd. 29, Nr. 9, 1. September 2007 (2007-09-01), Seiten 1627-1641, XP011190167, ISSN: 0162-8828, DOI: 10.1109/TPAMI.2007.1084
- SPRINGER D ET AL: "Compression of 2D and 3D navigation video sequences using skip mode masking of static areas", 2012 PICTURE CODING SYMPOSIUM (PCS), KRAKOW, POLAND, IEEE PISCATAWAY, NJ, USA, 7. Mai 2012 (2012-05-07), Seiten 301-304, XP002696722, ISBN: 978-1-4577-2047-5
- RAMIREZ ACOSTA A A ET AL: "Analyzing Video Object Motion Focusing on Non-Planar Rotation for Two Video Applications", COMPUTING, 2006. CIC '06. 15TH INTERNATIONAL CONFERENCE ON, IEEE, PI, 1. November 2006 (2006-11-01), Seiten 33-36, XP031024759, DOI: 10.1109/CIC.2006.25 ISBN: 978-0-7695-2708-6

**Beschreibung**

Die Erfindung betrifft ein Verfahren zum Verarbeiten einer Bildsequenz. Unter einer Bildsequenz ist im Zusammenhang mit der Erfindung ein Signal zu verstehen, welches eine Abfolge von Bildern repräsentiert. Bei dem Verfahren wird durch eine Bildverarbeitungseinrichtung in einem aktuellen Bild eine Lageveränderung von darin abgebildeten Objekten bezüglich eines Referenzbildes ermittelt. Zur Erfindung gehört auch ein Testgerät für einen Kraftwagen, welches eine Videocodiereinrichtung aufweist.

Um eine Bildsequenz mit möglichst wenig Daten speichern zu können, kann im Rahmen einer Videocodierung eine Bildkomprimierung vorgesehen sein, bei welcher Bildinhalte eines aktuellen Bildes dadurch beschrieben werden, dass lediglich der Unterschied des aktuellen Bildes zu einem Referenzbild angegeben wird (sog. Inter-Prädiktion). Ein Kompressionsgewinn ergibt sich hierbei in der Regel dadurch, dass zum Angeben absoluter Farbenintensitätswerte eines Bildes mehr Bits nötig sind als für die Codierung der Unterschiede zwischen den Farbintensitätswerten des Referenzbildes und des aktuellen Bildes. Wird durch eine Bildsequenz ein bewegtes Objekt dargestellt, so kann dieser Kompressionsgewinn dadurch erzielt werden, dass für die Bestimmung des Unterschieds zunächst zueinander passende Bildbereiche der beiden verglichenen Bilder gefunden werden. Befindet sich beispielsweise das Objekt im Referenzbild in einer linken oberen Ecke und in dem aktuellen Bild in einer rechten unteren Ecke, weil sich das Objekt diagonal durch den gezeigten Bildausschnitt bewegt, so macht es keinen Sinn, eine Differenz zwischen der linken oberen Ecke des Referenzbildes und eben der linken oberen Ecke des aktuellen Bildes zu berechnen. Vielmehr muss zunächst durch eine Bildverarbeitungseinrichtung in dem aktuellen Bild eine Lageveränderung von darin abgebildeten Objekten bezüglich des Referenzbildes ermittelt werden. Die hierbei erkannte Bewegung kann auf unterschiedliche Weise beschrieben werden. Beispielsweise können zu einer vorher festgelegten Bewegungsmodell die Modellparameter ermittelt werden. Hierzu ist beispielsweise der RANSAC-Algorithmus (RANSAC - random sample consensus, "Übereinstimmung mit einer zufälligen Stichprobe") bekannt. Bei diesem werden Abbildungsparameter einer Abbildungsvorschrift von rotierenden und/oder sich translatorisch verschiebenden Bildbereichen auf Grundlage markanter Bildmerkmale erkannt. Bei diesen Bildmerkmalen handelt es sich um Abbilder von Merkmalen der Objekte, die sowohl im aktuellen Bild als auch im Referenzbild dargestellt sind. Um solche Merkmale detektieren und einander zuordnen zu können, muss dem eigentlichen RANSAC-Algorithmus eine Verarbeitung beispielsweise mittels eines SIFT-Algorithmus (SIFT-Scale-invariant feature transform, "skaleninvariante Merkmalstransformation") oder eines SURF-Algorithmus (SURF - Speeded Up Robust Features, "Beschleunigte, robuste Merkmale") vorgeschaltet sein. Eine solche Merkmalserkennung und Zuordnung (Feature detection and matching) liefert Merkmalspaare aus jeweils einem Merkmal aus dem Referenzbild und einem Merkmal aus dem aktuellen Bild, die einander optisch entsprechen. In der Regel wird eine vorbestimmte Anzahl von Merkmalspaaren bereitgestellt.

Die Merkmalsdetektion und Zuordnung und eine daran anschließende Berechnung von Modellparametern zum Erkennen der Bewegung der Objekte funktioniert aber in der Regel nur dann effizient, wenn nur die Bewegung eines sehr großen Objekts oder gleichartige Bewegungen vieler kleiner Objekte die Veränderung in dem aktuellen Bild verursacht haben. Bewegen sich stattdessen mehrere Objekte in unterschiedliche Richtungen, so ist es sehr schwierig, einerseits geeignete Merkmalspaare zu finden und andererseits aus den Merkmalen die unterschiedlichen Bewegungen zu erkennen. Misslingt dies, so können Merkmale von bewegten Objekten nicht richtig einander zugeordnet werden. Entsprechend hat man im Zusammenhang mit der Codierung von Bildsequenzen, wie sie ein Navigationsgerät für eine Bildschirmanzeige in einem Kraftwagen erzeugt, einen verhältnismäßig geringen Kompressionsgewinn festgestellt. Solche Bildsequenzen möchte man zu Testzwecken aufnehmen können. Die Bildsequenzen zeichnen sich dadurch aus, dass dort in der Regel ein Kartenbereich dargestellt wird, der in Abhängigkeit davon rotiert wird, wie der Kraftwagen momentan bezüglich beispielsweise einer Nordsüdachse ausgerichtet ist. Gleichzeitig werden auf den Bildschirmen aber auch Statusleisten und Menüs dargestellt, die unabhängig von der Ausrichtung des Kraftwagens stets an derselben Position im Bild verbleiben. Die rotierenden Karteribereiche einerseits und die Statusleisten und Menüs andererseits stellen Objekte dar, die in der Bildsequenz unterschiedliche Bewegungen vollführen.

In einem Fachaufsatz von Zuliani et al (Zuliani, Kenney, Manjunath: "The MULTIRANSAC algorithm and its application to detect planar homographies", Proc. IEEE International Conference on Image Processing, Genova, Italy, Sep. 2005) wird hierzu ein Multimodell-RANSAC-Ansatz beschrieben, bei welchem in mehreren Iterationen unterschiedliche Abbildungsparameter für einzelne Objekte bestimmt werden. Die korrekte Segmentierung der einzelnen Objekte ist aber nicht immer möglich. Der Erfolg des Multimodell-RANSAC-Ansatzes hängt stark davon ab, ob die erste Iteration korrekte Ergebnisse geliefert hat. Zudem ist der Berechnungsaufwand für die Ermittlung der Abbildungsparameter sehr groß.

Eine Aufgabe der vorliegenden Erfindung ist es, ein Verfahren zur Verarbeitung einer Bildsequenz bereitzustellen, mittels welchem mit geringem Berechnungsaufwand eine verbesserte Bewegungserkennung erreicht wird.

Die Aufgabe betreffend die Bewegungserkennung wird durch ein Verfahren gemäß Patentanspruch 1 und ein Testgerät gemäß Patentanspruch 7 gelöst. Bezüglich einer Bewegungserkennung in einer Decodierung von komprimierten Bildsequenzen wird zusätzlich ein Verfahren bereitgestellt.

Das erste erfindungsgemäße Verfahren baut auf der beschriebenen Bewegungserkennung in einer Bildsequenz auf. Durch eine Bildverarbeitungseinrichtung wird in einem aktuellen Bild also die Lageveränderung von Bildmerkmalen bezüglich entsprechender Bildmerkmale in einem Referenzbild ermittelt. Hierzu werden Bildmerkmale aus dem aktuellen Bild einerseits und dem Referenzbild andererseits paarweise einander zugeordnet. Dies kann beispielsweise mittels des bereits beschriebenen SIFT-Algorithmus oder SURF-Algorithmus erfolgen. Auf der Grundlage der einander zugeordneten Bildmerkmale werden dann Modellparameter eines Bewegungsmodells bestimmt, durch welche die Lageveränderung beschrieben wird. Auch hier kann grundsätzlich auf einen bereits bekannten Algorithmus zurückgegriffen werden, wie beispielsweise den erwähnten RANSAC-Algorithmus. Erfindungsgemäß ist nun aber vorgesehen, zu dem aktuellen Bild zunächst zumindest einen stationären Bereich zu ermitteln, in welchem die Lageveränderung der darin enthaltenen Bildinhalte kleiner als ein vorbestimmtes Maß ist. Es wird hier also zumindest ein Bildbereich in dem aktuellen Bild gesucht, der sich im Vergleich zum Referenzbild nicht oder nur geringfügig verändert hat, wie es eben durch das vorgegebene Maß definiert ist. Zum Auffinden solcher Bereich können beispielsweise können die Farbintensitätswerte der einzelnen Bildpunkte beider Bilder voneinander subtrahiert werden. Bereiche, in denen der Betrag der Differenz kleiner als ein vorbestimmter Schwellenwert ist, können dann als unverändert angesehen werden. Wie bereits ausgeführt, würde es sich bei einer Bildsequenz eines Navigationsgeräts erwartungsgemäß um die Statusleisten und die Menüleisten handeln, bei denen sich keine signifikante Veränderung ergibt.

In einem weiteren Schritt des erfindungsgemäßen Verfahrens werden dann zum Bestimmen der Modellparameter nur solche Bildmerkmale zugrundegelegt, die sich außerhalb des zumindest einen stationären Bereichs befinden. Bei der erwähnten Navigationsbildsequenz würde dies also bedeuten, dass die Statusleisten und die Menüleisten von der Bestimmung der Modellparameter ausgenommen werden und nur rotierende Kartenbereiche berücksichtigt werden. Bei der Erfindung ist insbesondere vorgesehen, nur ein einziges Bewegungsmodell vorzusehen.

Das erfindungsgemäße Verfahren weist den Vorteil auf, dass die Modellparameter nun die Bewegung der in einem Bild auch tatsächlich bewegten Bildbereiche beschreiben. Die Erfindung beruht auf der Erkenntnis, dass durch Maskieren der stationären Bildbereiche bei der Bildung der Merkmalspaare oder letztendlich bei der Bestimmung der Modellparameter eine signifikante Verbesserung der Aussagekraft der Modellparameter erzielt wird. Bei Verfahren aus dem Stand der Technik werden nämlich beim paarweise Zuordnen von Bildmerkmalen mit großer Wahrscheinlichkeit auch stationäre Bildinhalte durch die Algorithmen erfasst. Grund dafür ist, dass stationäre Bildinhalte mit größerer Sicherheit als einander entsprechend erkannt werden.

Ausnahmen hierzu bilden die beiden Fachaufsätze von Niu et al (Niu, Liu: "Moving Object Segmentation in the H.264 Compressed Domain", Computer Vision ACCV 2009, Springer Berlin, 23. September 2009, Seiten 645 - 654) und Hötter et al (Hötter, Thoma: "Image segmentation based on object oriented mapping parameter estimation", Signal Processing, Elsevier Science Puplishers Amsterdam, NL, Bd. 15, Nr. 3, 1. Oktober 1988, Seiten 315-334), bei denen auch jeweils zunächst die stationären Bereiche ermittelt werden, um diese Bildbereiche dann anschließend für die Bewegungsparameterschätzung ausschließen zu können.

Eine Weiterbildung des erfindungsgemäßen Verfahrens sieht vor, dass der zumindest eine stationäre Bereich auf Grundlage von so genannten Skip-Mode-Informationen bestimmt wird, die durch einen Videocodierer bei einer Videocodierung des aktuellen Bildes erzeugt werden. Hierdurch ergibt sich der Vorteil, dass die erfindungsgemäße Bewegungserkennung mit sehr geringem zusätzlichem Berechnungsaufwand in einen Videocodierer integriert werden kann. Bei den Skip-Mode-Informationen handelt es sich um Daten, die zu jeden Bildblock, wie er üblicherweise einer Videocodierung zugrunde gelegt wird, bereits standardmäßig überprüft wird, ob sich dieser Bildblock des aktuellen Bilds von dem entsprechenden Bildblock des Referenzbildes überhaupt unterscheidet. Ist dies nicht der Fall, so wird durch die Skip-Mode-Information angezeigt, dass dieser Bildblock überhaupt nicht codiert werden soll (to skip - auslassen) und stattdessen der Bildblock des Referenzbildes verwendet werden soll.

Das erfindungsgemäße Verfahren sieht vor, das Referenzbild mittels der Modellparameter zu transformieren und das transformierte Referenzbild an eine Kompressionseinrichtung eines Videocodierers als bewegungskompensiertes Referenzbild zu übertragen. Bei einer Kompression des aktuellen Bildes, die auf der eingangs beschriebenen Beschreibung der Bildunterschiede zwischen dem aktuellen Bild und dem Referenzbild beruht, ist nun in vorteilhafter Weise direkt ein Vergleich des bewegungskompensierten Referenzbildes mit dem aktuellen Bild möglich. Wird hierbei nur ein einziges Bewegungsmodell zugrunde gelegt, so ergibt sich bei dieser Ausführungsform des Verfahrens eine globale Bewegungskompensation (GMC - Global Motion Compensation).

Die erfindungsgemäße Bewegungskompensation lässt sich auch problemlos mit einem Standard-Videocodierer verbinden, so dass die Stärken der bereits vorhandenen Bewegungskompensation weiter genutzt werden können. Das erfindungsgemäße Verfahren sieht hierzu vor, nur dort einzugreifen, wo ein Standard-Videocodierer Schwächen zeigt, nämlich bei einer Kompensation einer Rotation. Durch die Bildverarbeitungseinrichtung wird hier auf Grundlage der Modellparameter zunächst überprüft, ob die Lageveränderung eine Rotation umfasst. Das mittels der Modellparameter berechnete bewegungskompensierte Referenzbild wird dann nur zu der Kompressionseinrichtung übertragen, falls ein Rotationswinkel dieser Rotation größer als vorbestimmter Schwellenwert ist. Dem Schwellenwert kann beispielsweise eine Rotation von mehr als 3°, insbesondere mehr als 10°, zugrunde gelegt werden. Dadurch ergibt sich der Vorteil, dass ein Standard-Videocodierer gezielt bei der Codierung von Bildsequenzen unterstützt werden kann, die Rotationen der Bildinhalte beinhalten, welche in der Regel mit Standard-Algorithmen zur Bewegungskompensation nur unzureichend kompensiert werden können.

Als besonders günstig hat es sich erwiesen, wenn bei dem erfindungsgemäßen Verfahren als Modellparameter Matrixwerte für eine Transformationsmatrix zum Transformieren von homogenen Koordinaten ermittelt werden. Hierdurch lassen sich in vorteilhafter Weise insbesondere Rotationen und andere, in Navigationsbildsequenzen häufig vorzufindende Lageveränderungen der Bildmerkmale durch einfache mathematische Transformationen nachbilden.

Bei einer anderen Ausführungsform des erfindungsgemäßen Verfahrens wird beim paarweisen Zuordnen der Bildmerkmale für zumindest ein mögliches Merkmalspaar überprüft, ob dieses die so genannte Epipolarbedingung erfüllt. Mittels der Epipolargeometrie lässt sich in einer besonders recheneffizienten Weise überprüfen, ob das Merkmalspaar aus einer sinnvollen geometrischen Abbildung hervorgegangen sein kann. Ist dies nicht der Fall, so ist das Merkmalspaar als auf einer falschen Zuordnung beruhend anzusehen und zu verwerfen.

Wie sich herausgestellt hat, eignet sich das erfindungsgemäße Verfahren besonders gut für die Verwendung in einem H.264-Encoder, der auch MPEG4-Encoder genannt wird. Deshalb sieht eine Ausführungsform des Verfahrens vor, durch die Bildverarbeitungseinrichtung für einen H.264-Encoder auf der Grundlage der Modellparameter eine globale Bewegungskompensation durchzuführen. Im Unterschied zu aus dem Stand der Technik bekannten globalen Bewegungskompensationen ist die erfindungsgemäße Realisierung besonders recheneffizient und kann für einen H.264-Encoder bereitgestellt werden, wobei die Hardware des Encoders nur mit einer geringfügigen zusätzlichen Rechenleistung ausgestattet werden muss. Als genauso vorteilhaft hat es sich erwiesen, das erfindungsgemäße Verfahren in einem Videoencoder gemäß dem Standard HEVC (High Efficiency Video Coding) durchzuführen.

Bei einer Verwendung in einem Encoder ist zudem gemäß einer Ausführungsform des Verfahrens auch vorgesehen, die Modellparameter an einen Videodecoder zu übertragen. Dieser kann dann unmittelbar auf Grundlage der übertragenen Modellparameter ebenfalls ein bewegungskompensiertes Referenzbild erzeugen, wodurch sich auch die Decodierung beschleunigen lässt. In diesem Zusammenhang sieht das zweite Verfahren entsprechend vor, einen Videodecoder zu betreiben, indem zunächst ein Referenzbild decodiert wird, ein aktuelles codiertes Bild sowie die Modellparameter eines Bewegungsmodells empfangen werden, das decodierte Referenzbild auf der Grundlage der Modellparameter transformiert und anschließend das aktuelle codierte Bild auf der Grundlage des transformierten Referenzbildes decodiert wird.

Wie bereits ausgeführt, kann der durch das erfindungsgemäße Verfahren erzielbare Komprimierungsgewinn insbesondere im Zusammenhang mit der Verarbeitung von Bildsequenzen eines Navigationsgeräts realisiert werden. In diesem Zusammenhang wird durch die Erfindung ein Testgerät für einen Kraftwagen bereitgestellt, welches eine Bildverarbeitungseinrichtung aufweist die dazu ausgelegt ist, eine Bildsequenz von einem Navigationsgerät des Kraftwagens zu empfangen und zu einem aktuellen Bild der Bildsequenz für eine Bewegungserkennung Modellparameter eines Bewegungsmodells auf der Grundlage einer Ausführungsform des erfindungsgemäßen Verfahrens zu ermitteln.

Eine Weiterbildung des Testgeräts sieht vor, Bildsequenz durch eine Videocodiereinrichtung auch zu codieren, wobei dann die Bildverarbeitungseinrichtung zusätzlich dazu ausgelegt ist, zu dem aktuellen Bild der Bildsequenz ein bewegungskompensiertes Referenzbild auf der Grundlage der Modellparameter zu berechnen. Der bei der Videocodierung der Bildsequenz erzielbare Kompressionsgewinn ermöglicht es, die Bildsequenzen mit weniger Daten zu speichern. Es können also zum Testen des Navigationsgeräts längere Testfahrten unternommen werden, ohne dass in dem Testgerät ein größerer Speicher zum Speichern der Bildsequenzen bereitgestellt werden muss, als es bei üblichen Testgeräten dieser Art der Fall ist.

Im Folgenden wird die Erfindung noch einmal genauer anhand eines konkreten Ausführungsbeispiels erläutert. Dazu zeigen:

Fig. 1 eine schematische Darstellung eines Kraftwagens, in welchem sich eine bevorzugte Ausführungsform des erfindungsgemäßen Testgeräts befindet;

Fig. 2 ein Blockdiagramm zu einem Videocodierer, welcher eine bevorzugte Ausführungsform des erfindungsgemäßen Verfahrens ausführt; und

Fig. 3 eine schematische Darstellung zweier Bilder aus einer Bildsequenz, die ein Navigationsgerät des Kraftwagens von Fig. 1 erzeugt.

Bei dem im Folgenden erläuterten Beispiel stellen die beschriebenen Komponenten des Testgeräts und die beschriebenen Schritte des Verfahrens jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

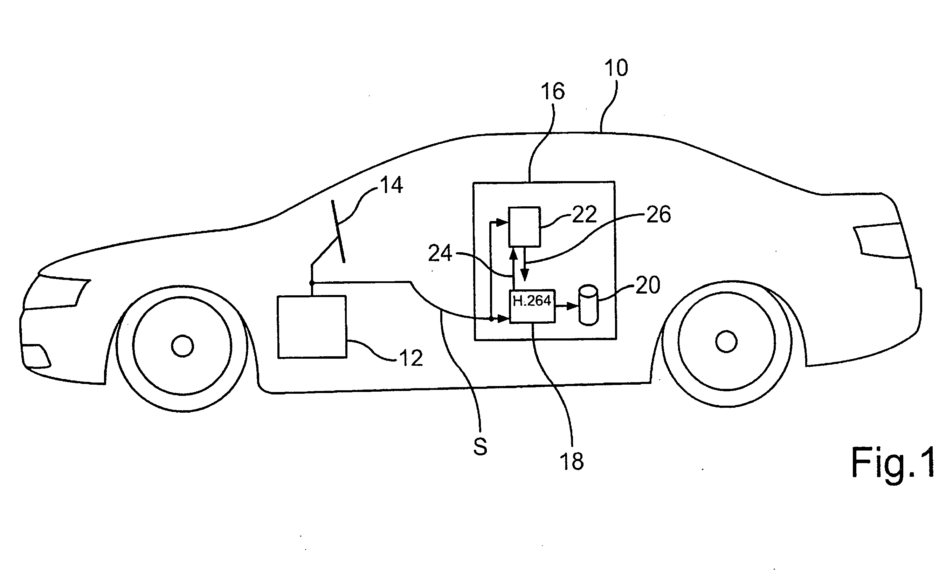

In Fig. 1 ist ein Kraftwagen 10 gezeigt, bei dem es sich beispielsweise um einen Personenkraftwagen handeln kann. Während einer Testfahrt wird bei dem Kraftwagen 10 untersucht, ob ein Navigationsgerät 12, das in den Kraftwagen 10 eingebaut ist, auf einem Bildschirm 14 Straßenkarten und weitere Informationen in einer gewünschten Weise darstellt. Ein (nicht dargestellter) Testfahrer fährt dazu mit dem Kraftwagen 10 eine Teststrecke entlang. Um es dem Testfahrer zu ermöglichen, sich auf den Verkehr zu konzentrieren, wird die von dem Navigationsgerät 12 erzeugte Bildsequenz S von einem Testgerät 16 während der Testfahrt aufgezeichnet. Die Bildsequenz S kann dann nach Beendigung der Fahrt ausgewertet werden.

Für die Aufzeichnung wird das Bildsignal des Navigationsgeräts 12, als welches die Bildsequenz S vorliegt, über ein Kabel zu dem Testgerät 16 übertragen. Beispielsweise kann vorgesehen sein, mittels des Kabels ein LVDS-Videosignal (LVDS - Low Voltage Differential Signal - Niedervolt-Differenzsignal) an das Testgerät 16 zu übertragen. In dem Testgerät 16 wird die Bildsequenz S mittels eines Videocodierers 18 komprimiert und die komprimierte Bildsequenz in einem Datenspeicher 20 abgespeichert. Bei dem Videocodierer 18 kann es sich beispielsweise um einen H.264-Videocodierer oder einen HEVC-Videokodierer handeln. Die Kompressionsrate, die mit dem Videocodierer 18 erzielt wird, ist höher als bei einem Standard-Videocodierer desselben Typs. Hierzu ist die Funktionalität des Videocodierers 18 durch eine Bildverarbeitungseinrichtung 22 erweitert worden.

Die Bildverarbeitungseinrichtung 22 stellt eine zusätzliche Bewegungskompensation für den Videocodierer 18 bereit. Sie empfängt dazu die Bildsequenz S. Über eine Verbindung 24 empfängt sie vom Videocodierer 18 Skip-Mode-Informationen. Über eine Verbindung 26 kann die Bildverarbeitungseinrichtung 22 zu einem zu codierenden aktuellen Bild ein bewegungskompensiertes Referenzbild in den Videocodierer 18 übertragen. Bei dem Videocodierer 18 und der Bildverarbeitungseinrichtung 22 kann es sich jeweils beispielsweise um Software eines digitalen Signalprozessors oder aber auch um Bestandteile eines FPGA (field programmable gate array) oder eines ASIC (application specific integrated circuit) oder aber auch um ein Programm einer CPU (general purpose processing unit) handeln. Die Bildverarbeitungseinrichtung 22 kann auch in den Videocodierer 18 integriert sein.

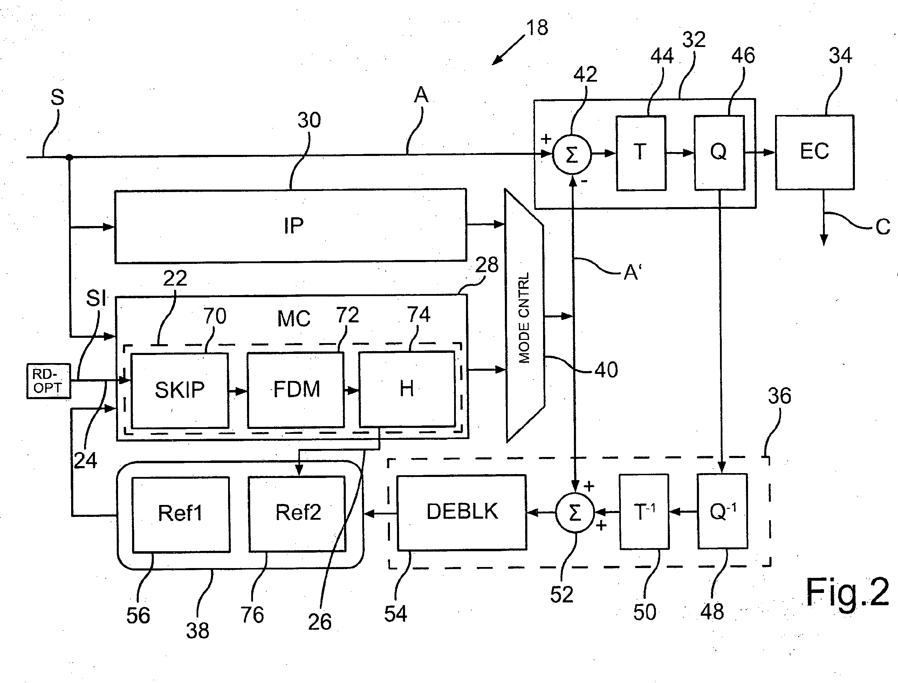

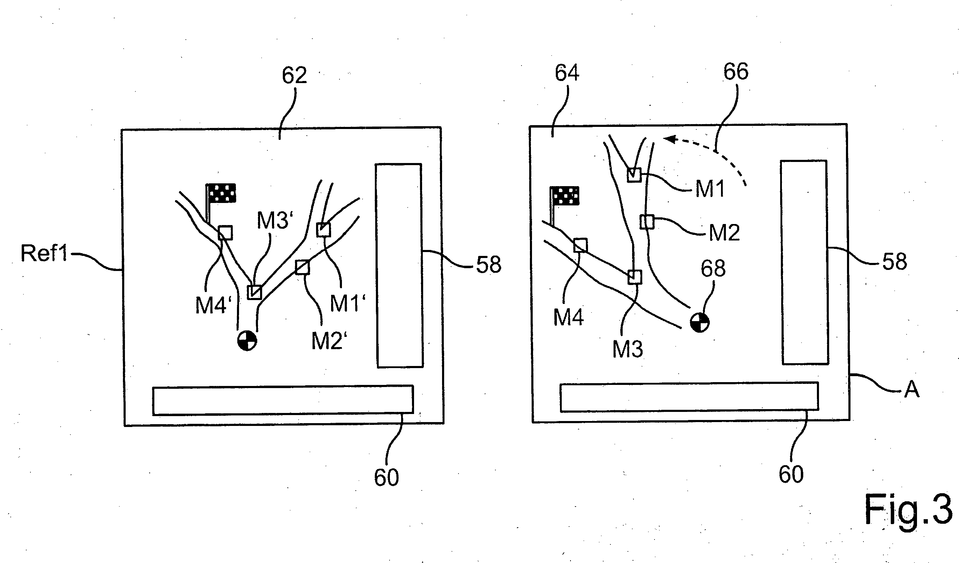

Im Folgenden ist anhand von Fig. 2 und Fig. 3 die Funktionsweise des Videocodierers 18 und der Bildverarbeitungseinrichtung 22 erläutert.

Bei der in Fig. 2 gezeigten Ausführungsform ist die Bildverarbeitungseinrichtung 22 in eine Bewegungskompensation 28 integriert. Darüber hinaus weist der Videocodierer 18 in der bekannten Weise eine Intra-Prädiktion 30 (örtliche Prädiktion innerhalb eines Bildes), eine Differenzbildberechnungseinheit 32, eine Entropie-Encodierung 34, eine Decodiereinheit 36 und einen Referenzbildspeicher 38 auf. Zwischen der Intra-Prädiktion 30 und der Bewegungskompensation 28 kann mittels einer Modus-Steuerung 40 in Abhängigkeit von einem Qualitätsmaß umgeschaltet werden, wie es für andere Bewegungskompensationen aus dem Stand der Technik bereits bekannt ist.

Durch die Entropie-Codierung 34 wird der komprimierte Bitstrom C erzeugt, welcher auf dem Datenspeicher 20 abgespeichert wird. Die Entropie-Codierung 34 empfängt dazu von der Differenzbildberechnung ein Differenzbild, das durch einen Subtrahierer 42, der die Differenz zwischen den Bilddaten eines aktuellen Bildes A und einem prädizierten Bild A' des aktuellen Bildes A berechnet. Das Differenzbild wird mittels einer Transformation 44 (beispielsweise einer diskreten Cosinus-Transformation - DCT) blockweise transformiert. Durch einen Quantisierer 46 werden die Transformationskoeffizienten quantisiert. Die quantisierten Tranformationskoeffizienten werden dann an den Entropie-Codierung 34 übertragen. Des Weiteren werden die quantifizierten Koeffizienten an einen inversen Quantisierer 48 der Decodiereinheit 36 übertragen, deren Ausgabewerte von einer inversen Transformation 50 transformiert werden und dem prädizierten Bild A' des aktuellen Bildes A mittels eines Summierers 53 zugeschlagen werden. Das derart rekonstruierte aktuelle Bild wird durch ein Deblocking-Filter 54 gefiltert und das derart verbesserte, rekonstruierte Bild wird als erstes Referenzbild in einem ersten Listenplatz 56 einer Referenzbildliste im Referenzbildspeicher 38 gespeichert. Der Referenzbildspeicher 38, die Bewegungskompensation 28 und die Differenzbildberechnung 32 stellen eine Kompressionseinrichtung des Videocodierers 18 dar.

Für das Verständnis der folgenden Erläuterungen ist wichtig zu wissen, dass sich im Listenplatz 56 vor der Bearbeitung des aktuellen Bilds A das Referenzbild Ref1 befindet, das aus dem vorangegangenen Bild berechnet wurde.

Im Folgenden wird erklärt, wie aus dem aktuellen Bild A das prädizierte Bild A' durch die Bewegungskombination 28 berechnet wird. Wie gerade ausgeführt, befindet sich während dieser Berechnung in dem Referenzbildspeicher 38 im ersten Listenplatz 56 als Referenzbild Ref1 noch das verbesserte, rekonstruierte Bild des vorangegangenen Bildes, wie es von dem Deblocking-Filter 54 erzeugt wurde.

In Fig. 3 ist beispielhaft das Referenzbild Ref 1 und das aktuelle Bild A gezeigt. Beide Bilder Ref 1, A stammen aus der Bildsequenz S, wie es das Navigationsgerät 12 erzeugt hat. Auf beiden Bildern sind eine Statusleiste 58 und eine Menüleiste 60 angezeigt. Die Statusleiste 58 und die Menüleiste 60 sind in einem Vordergrund der Bilder Ref 1, A dargestellt. Einen Hintergrund bildet im Referenzbild Ref1 ein Kartenausschnitt 62, in welchem für einen Fahrer des Kraftwagens 10 eine Fahrroute markiert ist. Der in dem Referenzbild Ref 1 angezeigte Kartenausschnitt 62 stimmt weitestgehend mit einem Kartenausschnitt 64 überein, der im aktuellen Bild A zu sehen ist. Der Kartenausschnitt wird durch das Navigationsgerät 12 in Abhängigkeit von einer Fahrrichtung des Kraftwagens 10 gedreht. Aufgrund einer Kurvenfahrt ist der Kartenausschnitt 64 deshalb bezüglich des Kartenausschnitts 62 rotiert worden. Die Bildinhalte des Kartenausschnitts 64 sind hier z.B. durch eine Rotation 66 um eine aktuelle Position 68 des Kraftwagens 10 herum rotiert worden. Die Statusleiste 58 und die Menüleiste 60 werden dagegen in beiden Bildern Ref1, A stets an der selben Position dargestellt. Sie stellen stationäre Bereiche dar, die sich nicht mit der Fahrzeugorientierung ändern.

Die Bewegungskompensation 58 weist einen Skip-Mode-Block 70 auf. Der Skip-Mode-Block 70 empfängt von einem Raten-Verzerrungs-Optimierer (RD-Optimizer) RD-OPT zu einzelnen Bildblöcken eine Skip-Mode-Information SI, die zu jedem Bildblock anzeigt, ob sich die darin enthaltenen Bildinformationen des aktuellen Bildes A von dem Referenzbild Ref1 signifikant unterscheiden. Ein solcher Bildblock kann beispielsweise die Größe von 16 x 16 Pixeln aufweisen. Für die Berechnung der Skip-Mode-Information SI können die Farbintensitätswerte der einzelnen Pixel eines Blocks des aktuellen Bildes A und eines entsprechenden Blocks des Referenzbildes Ref1 voneinander subtrahiert werden. Anschließend können die Beträge der Differenzen für die einzelnen Pixel aufsummiert werden. Falls die Summe unter einem vorbestimmten Schwellwert liegt, kann davon ausgegangen werden, dass die beiden Blöcke nahezu identisch sind. Dann wird durch die Skipinformation SI diese Identität signalisiert. Anhand der Skip-Mode-Information SI erkennt der Skip-Mode-Block 70, dass es sich bei der Statusleiste 58 und der Menüleiste 60 um stationäre Bereiche handelt, die sich nicht bewegt haben. Diese Information wird als Maskierungsinformation genutzt. Sie wird einem dem Skip-Mode-Block 70 nachgeschalteten Merkmalserkennungs- und Zuordnungsblock, oder kurz FDM-Block 72, übergeben.

Der FDM-Block 72 führt eine Merkmalserkennung in dem aktuellen Bild A und dem Referenzbild Ref1 aus. Der FDM-Block 72 kann hierzu beispielsweise den SIFT-Algorithmus oder den SURF-Algorithmus ausführen. Die Merkmale werden dabei von dem FDM-Block 72 nur außerhalb der stationären Bereiche, d. h. außerhalb der Statusleiste 58 und der Menüleiste 60 detektiert. Diese stationären Bereiche erkennt der FDM-Bolck 72 anhand der Maskeninformationen des Skip-Mode-Blocks 70. In dem in Fig. 3 veranschaulichten Beispiel werden durch den FDM-Block 72 Merkmale (M1 bis M4, M1' bis M4') in beiden Bildern A, Ref1 erkannt. In einem weiteren Schritt wird durch den FDM-Block 72 eine Merkmalszuordnung durchgeführt, sodass korrespondierende Merkmale zu Merkmalspaaren M1-M1', M2-M2', M3-M3' und M4-M4' zusammengefasst werden. Die Merkmalspaare werden einer Schätzeinrichtung 74 übergeben.

Dies kann beispielsweise in der Form realisiert werden, dass die Koordinaten der einzelnen Merkmale in den jeweiligen Bildern A, Ref 1 übermittel werden, zusammen mit der Information, welche Koordinaten zusammengehören.

Durch die Schätzeinrichtung 74 werden Modellparameter eines Bewegungsmodells auf Grundlage der Merkmalspaare berechnet. Durch die Modellparameter wird das Bewegungsmodell dahingehend konfiguriert, dass es die Rotation 66 beschreibt. Beispielsweise kann die Schätzeinrichtung 74 für die Schätzung der Modellparameter den RANSAC-Algorithmus ausführen. Die Merkmalspaare umfassen nur Merkmale, die außerhalb der stationären Bereiche 58, 60 liegen.

Die Modellparameter stellen im vorliegenden Beispiel Matrixeinträge einer Transformationsmatrix H dar. Die Matrix H beschreibt eine protektive Transformation, mittels welcher die Koordinaten x eines Bildpunkts des aktuellen Bilds A transformiert werden können. Hieraus ergibt sich der transformierte Bildpunkt mit den Koordinaten x', der einen Bildpunkt des prädizierten Bildes A' des aktuellen Bilds A bildet. Die Transformation ist durch die folgende Gleichung gegeben:

$$Hx = x'$$

Durch die Schätzeinrichtung 74 wird in einem weiteren Schritt überprüft, ob die Transformationsmatrix H der Identitätsmatrix entspricht oder zumindest ein Unterschied zur Identitätsmatrix kleiner als ein vorbestimmter Schwellenwert ist. Ist dies der Fall, so wird für das aktuelle Bild A nichts weiter durch die Schätzeinrichtung 74 unternommen. Das aktuelle Bild A wird dann gemäß dem H.264-Standard in der bekannten Weise verarbeitet. Das Gleiche gilt auch für den Fall, dass die Transformationsmatrix H ausschließlich eine Translation beschreibt. Diese kann bereits durch in der Bewegungskompensation 28 standardmäßig enthaltene Kompensationsalgorithmen, die nicht zur Bildverarbeitungseinrichtung 22 gehören, ausreichend gut kompensiert werden.

Für den Fall, dass die Transformationsmatrix H einen signifikanten Anteil an einer Rotation, in diesem Fall die Rotation 66, aufweist wird das Referenzbild Ref1 mittels der Transformationsmatrix H in ein weiteres Referenzbild Ref2 transformiert, das ebenfalls im Referenzbildspeicher 38 als ein zweiter Listeneintrag 76 der Liste von Referenzbildern abgespeichert wird. Im vorliegenden Fall ist der Videocodierer 18 nach dem H.264 Standard konstruiert. Entsprechend können die beiden Referenzbilder Ref 1 und Ref 2 als erster und zweiter sogenannter Referenzrahmen in der an sich bekannten L0-Liste im Referenzspeicher 38 gespeichert werden. Die Liesteneinträge 56 und 76 stellen dann den ersten bzw. zweiten Listeneintrag der L0-Liste dar.

Das Referenzbild Ref2 stellt aufgrund der Transformation mit der Transformationsmatrix H den Kartenausschnitt 62 des Referenzbildes Ref 1 in der selben Weise rotiert dar, wie er sich auch bei dem aktuellen Bild A aufgrund der Rotation 66 ergeben hat. Das Referenzbild Ref2 stellt damit eine Schätzung des aktuellen Bildes A in Bezug auf den Kartenausschnitt 64 dar. Die Informationsmatrix H wird auf alle Bildpunkte des Referenzbildes Ref1 angewendet. Das Referenzbild Ref2 stellt damit ein global bewegungskompensiertes Bild dar. In dem Referenzbild Ref2 sind die stationären Bereiche 58, 60 ebenfalls mitrotiert worden. Diese Information ist zum Berechnen des Differenzbildes in der Differenzbildberechnungseinheit 32 nicht sinnvoll. Die Berechnung mittels des Subtrahierers 42 wird bei dem Videocodierer 18 deshalb bildblockweise durchgeführt. Für jeden Bildblock des aktuellen Bildes A wird dabei durch Vergleichen des Bildblocks mit den entsprechenden Bildblöcken des Referenzbildes Ref1 und des Referenzbildes Ref2 entschieden, ob zum Bilden des entsprechenden Bildblocks des prädizierten Bildes A' ein Bildblock aus dem Referenzbild Ref1 oder aus dem Referenzbild Ref2 entnommen werden soll. Die stationären Bereiche 58, 60 werden durch dieses Vorgehen automatisch aus dem Referenzbild Ref1 entnommen. Es sind daher keine aufwändigen Berechnungen zum Konstruieren eines globalen bewegungskompensierten Bildes nötig, bei welchem die stationären Bereiche 58, 60 korrigiert wären.

Die Kombination aus dem Videocodierer 18 und der Bildverarbeitungseinrichtung 22 ergibt insbesondere die drei folgenden Vorteile gegenüber dem Stand der Technik. Im Gegensatz zu üblichen algorithmischen Lösungen mit mehreren Bewegungsmodellen, wie etwa dem Multimodell-RANSAC, kann die Stabilisierung der Modellparameterschätzung mit minimalem Mehraufwand erreicht werden. Dies ist möglich, da der traditionelle Videoencoderprozess auf eine Skip-Mode-Berechnung angewiesen ist und dieser Rechenschritt in jedem Fall auszuführen wäre. Im Falle von statischen bzw. stationären Bereichen mit einfarbigem Hintergrund können die Skip-Mode-Entscheidungen direkt vom Encoder übernommen werden, was annähernd keinen zusätzlichen Berechnungsaufwand darstellt. Im Falle von stationären Bereichen mit Transparenz müssen die Skip-Mode-Berechnungen des Encoders lediglich um Rechenanweisungen kleinen Umfangs ergänzt werden.

Als Folge findet die Merkmalserkennung, Merkmalszuordnung im FDM-Block 70 und in der Schätzeinrichtung 74 die Ausreißerbestimmung und die Parameterberechnung lediglich auf Basis jener Bildbereiche statt, die zu rotierten und/oder translatorisch verschobenen Kartenbereichen 62, 64 gehören. Eine Falschbestimmung der Modellparameter bzw. eine Destabilisierung der Modellparameterschätzung durch Überlagerung unterschiedlicher Bewegungsmodelle (Rotation 66 einerseits und stationäres Verhalten, d. h. keine Lageveränderung der stationären Bereiche 58, 60 andererseits) wird somit vermieden.

Die Auswertung der Skip-Mode-Entscheidungen des Videoencoders erlaubt eine sehr präzise Schätzung, welche Bereiche der Navigationssequenz durch statische Bildbereiche eingenommen werden. Änderungen in den statischen Bereichen finden relativ selten und örtlich stark begrenzt statt, sodass diese selbst bei einer Encodierung mittels eines Nicht-Skip-Blockmodus die korrekte Modellparameterschätzung nur unmerklich beeinflussen können. Die Erfindung ist damit in der Lage, zu Kartenbewegungen die zugehörigen Modellparameter eines Bewegungsmodells auf verlässliche und robuste Weise zu ermitteln.

Die hohe Güte der Modellparameterschätzung erlaubt die durchgehende Unterstützung des Videoencodierprozesses mit einem zusätzlichen, projektiv transformierten Referenzbild, also in dem Beispiel dem Referenzbild Ref2. Mit Güte ist hierbei sowohl die Robustheit der Schätzung als auch die Verringerung des Restfehlers der ermittelten Modellparameter gemeint. Bei hoher Güte ist es möglich, den Aufwand an Bitrate zu senken, der zur Encodierung einer Navigationssequenz bei gleichbleibender Bildqualität nötig ist. Auch ist damit möglich, bei gleichbleibender Bitrate die Qualität des encodierten Videos im Vergleich zu einem traditionellen Videocodierer zu erhöhen.

**Patentansprüche**

1. Verfahren zur Bewegungserkennung in einer Bildsequenz (S) und zur Codierung der Bildsequenz (S), bei welchem durch eine Bildverarbeitungseinrichtung (22) in einem aktuellen Bild (A) der Bildsequenz (S) eine Lageveränderung von Bildmerkmalen (M1 bis M4) bezüglich entsprechener Bildmerkmale (M1' bis M4') in einem Referenzbild (Ref1) der Codierung der Bildsequenz (S) ermittelt wird, mit den Schritten:

- Paarweise Zuordnen der einander entsprechenden Bildmerkmale (M1-M1' bis M4-M4'),
- Bestimmen von die Lageveränderung beschreibenden Modellparametern eines Bewegungsmodells (H) auf der Grundlage der einander zugeordneten Bildmerkmale (M1-M1' bis M4-M4'),

wobei zu dem aktuellen Bild zumindest ein stationärer Bereich (98, 60) ermittelt wird, in welchem die Lageveränderung von darin enthaltenen Bildinhalten bezüglich des Referenzbildes (Ref1) kleiner als ein vorbestimmtes Maß ist, und zum Bestimmen der Modellparameter nur Bildmerkmale (M1 bis M4, M1' bis M4') zugrunde gelegt werden, die sich außerhalb des zumindest einen stationären Bereichs (98, 60) befinden, und wobei

das Referenzbild (Ref 1) mittels der Modellparameter transformiert und das transformierte Referenzbild (Ref 2) an eine Kompressionseinrichtung eines Videocodierers als bewegungskompensiertes Referenzbild für die Codierung übertragen wird,

**dadurch gekennzeichnet, dass**

durch die Bildverarbeitungseinrichtung (22) auf der Grundlage der Modellparameter zunächst überprüft wird, ob die Lageveränderung eine Rotation (66) umfasst, und das bewegungskompensierte Referenzbild (Ref 2) nur übertragen wird, falls ein Rotationswinkel der Rotation (66) größer als ein vorbestimmter Schwellenwert ist.

2. Verfahren nach Anspruch 1, wobei der zumindest eine stationäre Bereich (98, 60) auf der Grundlage von Skip-Mode-Informationen (SI) bestimmt wird, die durch einen Videocodierer (18) bei einer Videocodierung des aktuellen Bildes (A) erzeugt werden.

3. Verfahren nach einem der vorhergehenden Ansprüche, wobei als Modellparameter Matrixwerte für eine Transformationsmatrix (H) zum Transformieren von homogenen Koordinaten ermittelt werden.

4. Verfahren nach einem der vorhergehenden Ansprüche, wobei beim paarweisen Zuordnen der Bildmerkmale (M1 bis M4, M1' bis M4') für zumindest ein mögliches Merkmalspaar überprüft wird, ob dieses eine Epipolarbedingung erfüllt.

5. Verfahren nach einem der vorhergehenden Ansprüche, wobei durch die Bildverarbeitungseinrichtung (22) für einen H.264-Encoder (18) oder einen HEVC-Encoder auf der Grundlage der Modellparameter eine globale Bewegungskompensation durchgeführt wird.

6. Verfahren nach einem der vorhergehenden Ansprüche, wobei die Modellparameter an einen Videodecoder übertragen werden.

7. Testgerät (16) für einen Kraftwagen (10), welches eine Bildverarbeitungseinrichtung (22) aufweist, die dazu ausgelegt ist, eine Bildsequenz (S) von einem Navigationsgerät des Kraftwagens zu empfangen und zu einem aktuellen Bild (A) der Bildsequenz (S) für eine Bewegungserkennung Modellparameter eines Bewegungsmodells zu ermitteln, und welches eine Videocodiereinrichtung (18) aufweist, die dazu ausgelegt ist, die Bildsequenz (S) zu codieren, wobei die Bildverarbeitungseinrichtung (22) zusätzlich dazu ausgelegt ist, zu dem aktuellen Bild (A) der Bildsequenz (S) ein bewegungskompensiertes Referenzbild (Ref 2) für die Vidercodierung auf der Grundlage der Modellparameter zu berechnen,

**dadurch gekennzeichnet, dass** die Bildverarbeitungseinrichtung (22) dazu ausgelegt ist, die Schritte nach einem der Verfahren der Ansprüche 1 bis 6 durch zuführen.

**Claims**

1. Method for recognising motion in an image sequence (S) and for coding the image sequence (S), in which an image processing device (22) ascertains a change of position of image features (M1 to M4) in a current image (A) from the image sequence (S) with respect to corresponding image features (M1' to M4') in a reference image (Ref1) from the coding of the image sequence (S), the method comprising the steps of:

   - pairing the mutually corresponding image features (M1-M1' to M4-M4'),
   - determining model parameters for a motion model (H) describing the change of position based on the image features (M1-M1' to M4-M4') associated with one another,
   at least one stationary region (98, 60) being ascertained for the current image, in which region the change of position of the image contents contained therein with respect to the reference image (Ref1) is smaller than a predetermined amount, and only image features (M1 to M4, M1' to M4') which are situated outside the at least one stationary region (98, 60) being taken as a basis for determining the model parameters, and
   the reference image (Ref1) being transformed by means of the model parameters and the transformed reference image (Ref2) being transmitted for the coding to a compression device of a video coder as a motion-compensated reference image, **characterised in that**, based on the model parameters, the image processing device (22) first checks whether the change of position comprises a rotation (66), and the motion-compensated reference image (Ref2) is transmitted only if an angle of rotation of the rotation (66) is greater than a predetermined threshold value.

2. Method according to claim 1, wherein the at least one stationary region (98, 60) is determined based on skip mode information (SI) that is produced by a video coder (18) during video coding of the current image (A).

3. Method according to either of the preceding claims, wherein matrix values for a transformation matrix (H) for transforming homogeneous coordinates are ascertained as model parameters.

**4.** Method according to any of the preceding claims, wherein during the pairing of the image features (M1 to M4, M1' to M4'), a check is made of at least one possible feature pair to determine whether said feature pair satisfies an epipolar condition.

**5.** Method according to any of the preceding claims, wherein the image processing device (22) carries out global motion compensation for an H.264 encoder (18) or an HEVC encoder based on the model parameters.

**6.** Method according to any of the preceding claims, wherein the model parameters are transmitted to a video decoder.

**7.** Testing device (16) for a motor vehicle (10) which comprises an image processing device (22) designed to receive an image sequence (S) from a navigation device in the motor vehicle and to ascertain model parameters of a motion model for a current image (A) from the image sequence (S) for recognising motion, and which comprises a video coding device (18) designed to code the image sequence (S), the image processing device (22) being additionally designed to calculate, for the current image (A) from the image sequence (S), a motion-compensated reference image (Ref2) for the video coding based on the model parameters, **characterised in that** the image processing device (22) is designed to carry out the steps of one of the methods of claims 1 to 6.

**Revendications**

**1.** Procédé de reconnaissance de mouvement dans une séquence d'images (S) et de codage de la séquence d'images (S), dans lequel un dispositif de traitement d'images (22) détermine dans une image courante (A) de la séquence d'images (S) un changement de position de caractéristiques d'images (M1 à M4) par rapport à des caractéristiques d'images correspondantes (M1' à M4') dans une image de référence (Réf 1) du codage de la séquence d'images (S), avec les étapes consistant à :

- affecter par paires les caractéristiques d'images (M1-M1' à M4-M4') qui se correspondent,
- déterminer des paramètres de modélisation d'un modèle de mouvement (H) décrivant le changement de position sur la base des caractéristiques d'images (M1-M1' à M4-M4') qui sont affectées l'une à l'autre,
dans lequel on détermine pour l'image courante au moins une zone stationnaire (98, 60) dans laquelle le changement de position des contenus images qui y sont présents est plus petit qu'une mesure prédéterminée par rapport à l'image de référence (Réf 1) et, pour déterminer les paramètres de modélisation, seules sont prises en compte les caractéristiques d'images (M1-M1' à M4-M4') qui se trouvent en dehors de la au moins une zone stationnaire (98, 60) et dans lequel
l'image de référence (Réf 1) est transformée au moyen des paramètres de modélisation et l'image de référence transformée (Réf 2) est transférée à un dispositif de compression d'un codeur vidéo comme image de référence compensée en mouvement pour le codage,
**caractérisé en ce que** :

on contrôle tout d'abord par le dispositif de traitement d'images (22) sur la base des paramètres de modélisation si le changement de position comprend une rotation (66) et l'image de référence (Réf 2) compensée en mouvement n'est transmise qu'au cas où un angle de rotation (66) est plus grand qu'une valeur de seuil prédéterminée.

**2.** Procédé selon la revendication 1, dans lequel la au moins une zone stationnaire (98, 60) est déterminée sur la base d'informations en mode de saut (SI) qui sont produites par un codeur vidéo (18) lors d'un codage vidéo de l'image courante (A).

**3.** Procédé selon l'une quelconque des revendications précédentes, dans lequel on détermine comme paramètres de modélisation des valeurs matricielles pour une matrice de transformation (H) destinée à transformer des coordonnées homogènes.

**4.** Procédé selon l'une quelconque des revendications précédentes, dans lequel, lors de l'affectation par paires des caractéristiques d'image (M1 à M4, M1' à M4'), on contrôle pour au moins une paire de caractéristiques possibles si celle-ci répond à une condition épipolaire.

**5.** Procédé selon l'une quelconque des revendications précédentes, dans lequel le dispositif de traitement d'images (22) réalise une compensation de mouvement globale pour un codeur H.264 (18) ou un codeur HEVC sur la base des paramètres de modélisation.

**6.** Procédé selon l'une quelconque des revendications précédentes, dans lequel les paramètres de modélisation sont transférés à un décodeur vidéo.

**7.** Appareil d'essai (16) pour un véhicule automobile (10) qui présente un dispositif de traitement d'images (22) qui est conçu de manière à recevoir une séquence d'images (S) d'un appareil de navigation du véhicule automobile et à obtenir, pour une image courante (A) de la séquence d'images (S), moyennant une reconnaissance de mouvement, des paramètres de modélisation d'un modèle de mouvement, et qui présente un dispositif de codage vidéo (18) qui est conçu de manière à coder la séquence d'images (S), dans lequel le dispositif de traitement d'images (22) est en outre conçu de manière à calculer, pour l'image courante (A) de la séquence d'images (S), une image de référence compensée en mouvement (Réf 2) pour le codage vidéo sur la base des paramètres de modélisation,

**caractérisé en ce que** le dispositif de traitement d'images (22) est conçu de manière à réaliser les étapes selon l'un quelconque des procédés des revendications 1 à 6.

Fig.1

Fig.2

EP 2 777 017 B1

Fig.3

EP 2 777 017 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ZULIANI ; KENNEY ; MANJUNATH.** The MULTI-RANSAC algorithm and its application to detect planar homographies. *Proc. IEEE International Conference on Image Processing, Genova, Italy,* September 2005

- **NIU, LIU.** Moving Object Segmentation in the H.264 Compressed Domain. *Computer Vision ACCV 2009,* 23. September 2009, 645-654
- Image segmentation based on object oriented mapping parameter estimation. **HÖTTER, THOMA.** Signal Processing. Elsevier Science, 01. Oktober 1988, vol. 15, 315-334